# EUROPÄISCHE PATENTSCHRIFT

(11) **EP 3 081 491 B1**
(45) Veröffentlichungstag und Bekanntmachung des Hinweises auf die Patenterteilung: **28.08.2019**
(21) Anmeldenummer: 16000794.4
(22) Anmeldetag: 07.04.2016
(51) Int. Cl.: B64D 11/06

(54) **BEFESTIGUNGSANORDNUNG ZUR BEFESTIGUNG EINES MODULS AN MINDESTENS EINER BEFESTIGUNGSSCHIENE SOWIE AUFBEWAHRUNGSVORRICHTUNG FÜR EINE NOTFALLAUSRÜSTUNG IN EINEM FLUGZEUG**
FASTENING ASSEMBLY FOR FASTENING A MODULE TO AT LEAST ONE MOUNTING RAIL AND STORING DEVICE FOR AN EMERGENCY KIT IN AN AIRCRAFT
SYSTEME DE FIXATION D'UN MODULE SUR AU MOINS UN RAIL DE FIXATION ET DISPOSITIF DE STOCKAGE POUR UN EQUIPEMENT DE SECOURS DANS UN AVION

(30) Priorität: 16.04.2015 DE 102015004767
(43) Veröffentlichungstag der Anmeldung: 19.10.2016
(73) Patentinhaber: Diehl Aviation Hamburg GmbH, 21129 Hamburg (DE)
(72) Erfinder: Wolniak, Nikolai, 22399 Hamburg (DE); Teegen-Lehmann, Martina, 22850 Norderstedt (DE); Ehrlich, Sören, 22767 Hamburg (DE); Riedemann, Sebastian, 25421 Pinneberg (DE)
(74) Vertreter: Diehl Patentabteilung

(56) Entgegenhaltungen:
- WO-A1-2014/035244
- DE-A1- 2 920 547
- US-A1- 2008 231 075

## Beschreibung

Die Erfindung betrifft eine Befestigungsanordnung zur Befestigung eines Moduls (1) an mindestens einer Befestigungsschiene, mit einer Blockeinrichtung, wobei die Blockeinrichtung mindestens einen Nutenstein zur Befestigung der Blockeinrichtung in der Befestigungsschiene aufweist, und mit einer Feststelleinrichtung zur Klemmung des mindestens einen Nutensteins in der Befestigungsschiene. Die Erfindung betrifft desweiteren eine Aufbewahrungsvorrichtung für eine Notfallausrüstung in einem Flugzeug mit mindestens einer derartigen Befestigungsanordnung.

Zum Verzurren von Ladungen oder auch zum Befestigen von Sitzen und anderen Komponenten werden Befestigungssysteme eingesetzt, welche Schienen sowie Befestigungseinrichtungen aufweisen, die in den Schienen in einem Raster an einer beliebigen Position eingesetzt und fixiert werden können. Derartige Befestigungseinrichtungen weisen oftmals Nutensteine auf, die in entsprechende Aufnahmen der Schienen eingesetzt werden können.

Einen systematischen Ansatz zur Integration von Komponenten in ein Flugzeug bietet beispielsweise die Druckschrift US 819 1829 B2, die wohl den nächstkommenden Stand der Technik bildet. Unter anderem wird hierin auch ein sogenanntes Doghouse vorgestellt, welches über Sitzschienen in einem Flugzeug befestigt wird.

Aus der US 2008/0231075 A1 ist ein Frachtbett-Zubehör für ein Mehrzweckfahrzeug bekannt, das einen zentralen Körperabschnitt, einen ersten Seitenkörperabschnitt und eine Befestigungsstruktur enthält. Der erste Seitenkörperabschnitt ist entlang einer ersten Seitenkante des zentralen Körperabschnitts starr verbunden, um einen allgemein T-förmigen Querschnitt mit dem zentralen Körperabschnitt entlang eines Großteils einer Länge der ersten Seitenkante zu bilden. Der erste Seitenkörperabschnitt weist einen ersten Längsteil auf, der sich von einer ersten Seite des zentralen Körperabschnitts nach außen erstreckt, und einen zweiten Längsteil, der sich von einer zweiten Seite des zentralen Körperabschnitts nach außen erstreckt. Zumindest einer von dem zentralen Körperabschnitt und dem ersten Seitenkörperabschnitt umfasst die Befestigungsstruktur, die so konfiguriert und angeordnet ist, dass sie das Fahrzeug-Frachtbett-Zubehör sicher an einem Fahrzeug-Frachtbereich befestigt.

Es ist Aufgabe der vorliegenden Erfindung, eine Befestigungsanordnung zur Befestigung eines Moduls an mindestens einer Befestigungsschiene vorzuschlagen, welche Funktionsvorteile bietet. Diese Aufgabe wird durch eine Befestigungsanordnung mit den Merkmalen des Anspruchs 1 sowie durch eine Aufbewahrungsvorrichtung mit den Merkmalen des Anspruchs 8 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist damit eine Befestigungsanordnung, welche zur Befestigung eines Moduls an mindestens einer Befestigungsschiene geeignet und/oder ausgebildet ist. Das Modul ist besonders bevorzugt als ein Monument, wie z.B. ein Schrank, in einem Flugzeug ausgebildet. Insbesondere ist das Modul als eine Aufbewahrungsvorrichtung für eine Notfallausrüstung in dem Flugzeug ausgebildet.

Die Befestigungsanordnung weist eine Blockeinrichtung auf, wobei die Blockeinrichtung mindestens einen Nutenstein zur Befestigung der Blockeinrichtung in der Befestigungsschiene umfasst. Insbesondere ist der Nutenstein kompatibel zu der Befestigungsschiene ausgebildet. Die Befestigungsschiene weist mindestens einen Anlagebereich für den Nutenstein auf.

Die Befestigungsanordnung weist eine Feststelleinrichtung zur Klemmung des mindestens einen Nutensteins in der Befestigungsschiene auf. Durch die Klemmung wird erreicht, dass der Nutenstein und damit die Blockeinrichtung in der Befestigungsschiene lagefixiert sind.

Im Rahmen der Erfindung wird vorgeschlagen, dass die Befestigungsanordnung einen Gleitleistenabschnitt zur Verbindung der Befestigungsanordnung mit dem Modul aufweist, wobei der Gleitleistenabschnitt auf der Blockeinrichtung verschiebbar angeordnet ist und durch die Feststelleinrichtung feststellbar ist. Die Feststelleinrichtung nimmt damit eine Doppelfunktion ein, da diese zum einen den Nutenstein in der Befestigungsschiene klemmt und zum anderen den Gleitleistenabschnitt an der Blockeinrichtung fixiert. Solange somit die Feststelleinrichtung noch nicht festgestellt ist, kann der Gleitleistenabschnitt auf der Blockeinrichtung verschoben werden.

Es ist ein Vorteil der Erfindung, dass im Gegensatz zu üblichen Befestigungssystemen, welche bloß eine gestufte Befestigung der Befestigungseinrichtungen ermöglichen, die erfindungsgemäße Befestigungsanordnung zwar ebenfalls eine Vorauswahl der Position auf der Befestigungsschiene durch das Einsetzen der Blockeinrichtung mit dem Nutenstein in die Befestigungsschiene aufweist, eine Feinjustierung jedoch über das Verschieben des Gleitleistenabschnitts ermöglicht. Dadurch kann die erfindungsgemäße Befestigungsanordnung viel genauer oder feiner relativ zu der Befestigungsschiene eingestellt werden. Nachdem das Modul über den Gleitleistenabschnitt befestigt wird, wird gemeinsam mit dem Gleitleistenabschnitt auch das Modul verschoben und kann somit in der Lage relativ zu der Befestigungsschiene eingestellt werden. Damit weist die Befestigungsanordnung eine integrierte Feinjustagemöglichkeit für die Position des Moduls auf.

Gemäß der Erfindung umfasst die Befestigungsanordnung die mindestens eine Befestigungsschiene, wobei die Befestigungsschiene als eine T-Nutschiene ausgebildet ist und voneinander beabstandete Anlagebereiche für den Nutenstein aufweist. Insbesondere ist zwischen den Anlagebereichen jeweils eine Öffnung in der Schiene zum Einführen des Nutensteins angeordnet. Derartige Befestigungsschienen werden auch als Lochschienen oder Airline-Schienen bezeichnet. In einem Querschnitt senkrecht zu der Erstreckungsrichtung der Befestigungsschiene weist diese Bereiche mit einem T-förmigen, freien Nutbereich auf, wobei diese Bereiche des Anlagebereiche bilden, sowie Bereiche mit einem vorzugsweise rechteckigen freien Nutbereich auf, wobei diese Bereiche die Öffnungen zum Einführen des Nutensteins bilden. In einer Draufsicht zeigt die Befestigungsschiene eine Abfolge von kreisrunden Öffnungen, welche durch die Anlagebereiche voneinander beabstandet sind. Diese Befestigungsschienen sind als kommerzielle Produkte weit verbreitet und können insbesondere ohne weitere Anpassungen für die Erfindung genutzt werden.

Gemäß der Erfindung ist der Gleitleistenabschnitt relativ zu der Blockeinrichtung stufenlos verstellbar. Damit ist eine besonders feine Justierung zwischen dem Gleitleistenabschnitt und der Blockeinrichtung und damit zu der Befestigungsschiene möglich. Alternativ ist es auch möglich, dass der Gleitleistenabschnitt relativ zu der Blockeinrichtung gestuft verstellt werden kann, wobei jedoch der kleinstmögliche Verstellabstand kleiner als das Rastermaß oder der durchschnittliche Abstand der voneinander beabstandeten Anlagebereiche in der Befestigungsschiene ist. Damit wird mit der Wahl der Position der Blockeinrichtung in der Befestigungsschiene eine gestufte Grobjustage und durch die Einstellung des Gleitleistenabschnitts relativ zu der Blockeinrichtung eine gestufte Feinjustage umgesetzt. Es ist vorgesehen, dass der Gleitleistenabschnitt in der gewählten Position relativ zu der Blockeinrichtung durch die Feststelleinrichtung festlegbar ist.

Bei einer bevorzugten Ausgestaltung der Erfindung weist die Blockeinrichtung und/oder die Feststelleinrichtung mindestens einen Zapfen auf, wobei der Zapfen in eine der Öffnungen der T-Nutschiene eingreift oder eingreifen kann und die Befestigungseinrichtung gegen ein Verschieben formschlüssig sichert.

Bei einer möglichen Realisierung der Erfindung weist die Feststelleinrichtung einen Hebel, insbesondere einen Exzenterhebel, und einen Verbindungszapfen auf, wobei der Verbindungszapfen z.B. als ein Stangenabschnitt ausgebildet ist. Der Verbindungszapfen ist mit dem Zapfen verbunden, insbesondere ist der Zapfen an einem freien Ende des Verbindungszapfens angeordnet. Der Verbindungszapfen weist ein Außengewinde auf, welches in ein Innengewinde der Blockeinrichtung eingreift.

Durch Drehen des Verbindungszapfens kann somit der Zapfen aus der Blockeinrichtung herausgefahren werden, um in Eingriff mit der Befestigungsschiene zu kommen, und in die Blockeinrichtung hineingefahren werden, um außer Eingriff mit der Befestigungsschiene zu kommen. Für eine Fixierung der Blockeinrichtung relativ zu der Befestigungsschiene wird der Zapfen so weit aus der Blockeinrichtung herausgefahren, dass dieser an dem Nutboden der Befestigungsschiene anliegt. Dadurch wird die Blockeinrichtung von der Befestigungsschiene weggedrückt. Der mindestens eine Nutenstein wird zusammen mit der Blockeinrichtung von der Befestigungsschiene weggedrückt, liegt jedoch formschlüssig an dem Anlagebereich der Befestigungsschiene an, so dass der mindestens eine Nutenstein gegen die Befestigungsschiene geklemmt wird. Der Hebel ist auf dem Verbindungszapfen schwenkbar gelagert und stützt sich mittelbar oder unmittelbar auf dem Gleitleistenabschnitt ab. Bei einer Betätigung des Hebels wird der Verbindungszapfen mit einer Zugkraft in einer Richtung aus der Blockeinrichtung und von der Befestigungsschiene weggezogen. Dadurch, dass sich der Hebel an dem Gleitleistenabschnitt abstützt wird der Gleitleistenabschnitt gegen die Blockeinrichtung geklemmt und dadurch festgestellt. Diese Realisierung ist eine komfortable und damit vorteilhafte Möglichkeit zur Montage der Befestigungsanordnung.

Bei einer alternativen konstruktiven Realisierung der Erfindung weist die Feststelleinrichtung einen Hebel, insbesondere einen Exzenterhebel, sowie einen Verbindungszapfen auf, wobei der Verbindungszapfen mit dem Nutenstein verbunden ist und wobei sich der Hebel über den Gleitleistenabschnitt abstützt, sodass bei einer Betätigung des Hebels der Nutenstein in den Anlagebereich geklemmt wird und zugleich der Gleitleistenabschnitt auf der Blockeinrichtung geklemmt und damit festgestellt wird.

Bei beiden Realisierungen wird nochmals unterstrichen, dass die Feststelleinrichtung eine Doppelfunktion einnimmt, die darin besteht, dass zum einen der Nutenstein gegen die Befestigungsschiene und zum anderen der Gleitleistenabschnitt gegen die Blockeinrichtung geklemmt wird.

Es ist besonders bevorzugt vorgesehen, dass in dem Gleitleistenabschnitt ein Langloch angeordnet ist, durch den die Festelleinrichtung durchgeführt ist, so dass die Relativverschiebung zwischen dem Gleitleistenabschnitt und der Blockeinrichtung umgesetzt werden kann. Durch die Längserstreckung des Langlochs wird somit der mögliche Verschiebebereich des Gleitleistenabschnitts relativ zu der Blockeinrichtung festgelegt. Z.B. weist das Langloch eine Längserstreckung größer als 3cm, vorzugsweise größer als 5 cm auf. Es ist bevorzugt vorgesehen, dass sich das Langloch in Richtung der Längserstreckung der Befestigungsschiene erstreckt. Besonders bevorzugt ist durch das Langloch der Verbindungszapfen als Teil der Feststelleinrichtung durchgeführt.

Bei einer möglichen konstruktiven Weiterbildung ist an dem Gleitleistenabschnitt mindestens ein Träger zur Verbindung mit dem Modul angeordnet. Besonders bevorzugt handelt es sich bei dem Träger um ein Bauteil, welches einen Verbindungsabschnitt und einen Funktionsabschnitt aufweist, wobei der Träger über den Verbindungsabschnitt mit dem Gleitleistenabschnitt verbunden ist und über den Funktionsabschnitt mit dem Modul verbunden und/oder verbindbar ist. Beispielsweise ist der Träger als ein Abschnitt eines Strangpressprofiles, insbesondere eines Aluminiumstrangpressprofils ausgebildet.

Bei einer bevorzugten Ausgestaltung der Erfindung ist vorgesehen, dass der Träger mit mindestens einer Festschiene als Teil einer Schieneneinrichtung verbunden ist. Insbesondere trägt der Träger die Festschiene. Damit bildet die Befestigungsanordnung den stationären Teil einer Schienenführung. Insbesondere ist die Schieneneinrichtung ein Bestandteil der nachfolgend beschriebenen Aufbewahrungsvorrichtung.

Einen weiteren Gegenstand der Erfindung bildet somit eine Aufbewahrungsvorrichtung mit den Merkmalen des Anspruchs 10, welche zur Aufnahme einer Notfallausrüstung geeignet und/oder ausgebildet ist. Die Notfallausrüstung kann verschiedene Komponenten, wie z.B. Gurte, Sauerstoffflaschen, Defibrillator, Feueraxt, medizinische Präparate, Arzneimittel und/oder Verbandsmaterial aufweisen Die Komponenten der Notfallausrüstung können lose in der Aufbewahrungsvorrichtung angeordnet sein oder über Ordnungssysteme, wie z.B. Wandhalter, Bodenhalter etc. befestigt sein. Optional bildet die Notfallausrüstung einen Teil der Aufbewahrungsvorrichtung. Insbesondere ist die Aufbewahrungsvorrichtung als ein Dog-House ausgebildet. Die Aufbewahrungsvorrichtung ist zur Integration in einem Flugzeug, insbesondere in einem Passagierbereich des Flugzeugs, geeignet und/oder ausgebildet. Im Speziellen ist die Aufbewahrungsvorrichtung in dem Flugzeug integriert oder eingebaut.

Die Aufbewahrungsvorrichtung weist ein Gehäuse sowie eine oder die Schieneneinrichtung auf. Die Schieneneinrichtung ist in dem Gehäuse angeordnet. Ferner umfasst die Aufbewahrungsvorrichtung eine Schublade zur Aufnahme der Notfallausrüstung. Die Schublade ist auf der Schieneneinrichtung bewegbar angeordnet. Insbesondere bietet die Schieneneinrichtung eine Schienenführung für die Schublade. Die Schublade ist in einer Schließposition und in einer Öffnungsposition relativ zu dem Gehäuse anordbar. Bei der Schließposition sind die Schublade und damit auch die Notfallausrüstung in dem Gehäuse angeordnet, bei der Öffnungsposition ragt die Schublade und damit auch die Notfallausrüstung aus dem Gehäuse heraus.

Es ist vorgesehen, dass die Schieneneinrichtung und/oder die Aufbewahrungsvorrichtung mindestens eine Befestigungsanordnung wie diese zuvor beschrieben wurde und/oder nach einem der Ansprüche 1 bis 9 aufweist. Insbesondere dient die Befestigungsanordnung zur Befestigung der Schieneneinrichtung und/oder der Aufbewahrungsvorrichtung in dem Flugzeug. Mit dieser Art der Befestigung kann in vorteilhafterweise die genaue Position der Schieneneinrichtung und/oder der Aufbewahrungsvorrichtung in dem Flugzeug in einfacher Weise eingestellt werden. Vorzugsweise umfasst die Schieneneinrichtung und/oder die Aufbewahrungsvorrichtung zwei derartiger Befestigungsanordnungen.

Es wird optional ergänzend vorgeschlagen, dass das Gehäuse einen Hauptabschnitt und einen Abdeckungsabschnitt aufweist. Die Schieneneinrichtung ist mit dem Hauptabschnitt verbunden, sodass Hauptabschnitt und Schieneneinrichtung eine Vormontagebaugruppe bilden. Der Abdeckungsabschnitt ist dagegen an der Vormontagebaugruppe befestigt und insbesondere aufgesetzt. Insbesondere bildet der Abdeckungsabschnitt einen lösbaren Deckel für die Vormontagebaugruppe. Somit weist die Aufbewahrungsvorrichtung einen mindestens zweiteiligen Aufbau auf, wobei ein Teil durch die Vormontagebaugruppe und ein weiterer Teil durch den Abdeckungsabschnitt gebildet werden. Besonders bevorzugt nimmt der Abdeckungsabschnitt keine Tragfunktion für die Schieneneinrichtung ein. Im Speziellen wird der Abdeckungsabschnitt von der Schieneneinrichtung getragen. In dieser Ausgestaltung ist insbesondere vorgesehen, dass die Befestigungsanordnung zur Befestigung der Schieneneinrichtung ausgebildet ist.

Es ist dabei eine Überlegung der Ausgestaltung, dass die bisherige Montage derartiger Aufbewahrungsvorrichtungen aufwendig war, da ein Monteur oftmals in das Gehäuse hineingreifen musste, um die Aufbewahrungsvorrichtung in dem Flugzeug zu befestigen. Dadurch, dass erfindungsgemäß die Aufbewahrungsvorrichtung mindestens in eine Vormontagebaugruppe und einen Abdeckungsabschnitt zerfällt, wird erreicht, dass in einem ersten Schritt die Vormontagebaugruppe in dem Flugzeug befestigt werden kann und erst in einem nachfolgenden Schritt der Abdeckungsabschnitt auf die Vormontagebaugruppe aufgesetzt werden muss. Bis zum Aufsetzen des Abdeckungsabschnitts ist somit die Schieneneinrichtung und damit insbesondere die Befestigungsanordnung für den Monteur frei zugänglich. Durch diese konstruktive Aufteilung wird somit eine deutliche Vereinfachung für die Montage erreicht.

In einer bevorzugten Ausgestaltung der Erfindung weist die Schublade in dem Gehäuse einen Aufnahmeraum mit einem Höhe zu Breite - Verhältnis von mindestens 2:1, vorzugsweise von mindestens 3:1 auf. Dieses Format des Aufnahmeraums ist an die üblichen Dimensionen oder Platzbedarf der Notfallausrüstung angepasst.

Bei einer bevorzugten Weiterbildung der Erfindung weist die Schublade eine Blende und einen damit verbundenen Schubladenkörper auf. Es ist vorgesehen, dass die Blende das Gehäuse an einer Stirnseite abschließt und damit ein Seitenteil des Gehäuses bildet. Insbesondere bildet die Blende das vollständige Seitenteil des Gehäuses. Es ist dabei besonders bevorzugt, dass die Blende mindestens einen freien Kantenbereich des Gehäuses umgreift. Bislang wurden Blenden zu dem Gehäuse stets bündig angeordnet, was zu dem Problem geführt hat, dass die bündige Anordnung meist nur durch eine aufwändige Nacharbeit durch den Monteur zu erreichen war. Dadurch, dass die Blende mindestens einen freien Kantenbereich des Gehäuses umgreift, können Fertigungstoleranzen zwischen der Blende und dem Gehäuse durch das Umgreifen verdeckt werden. Es ist dabei besonders bevorzugt, dass der mindestens eine Kantenbereich dem Abdeckungsabschnitt zugeordnet ist. Gerade der Abdeckungsabschnitt ist als eine weitere Komponente der Aufbewahrungsvorrichtung durch das nachträgliche Aufsetzen auf die Vormontagebaugruppe lagetoleranzbehaftet. Dadurch, dass die Blende den mindestens einen freien Kantenbereich umgreift, wird dieser Kantenbereich optisch kaschiert. Der freie Kantenbereich ist besonders bevorzugt als eine Oberkante und/oder als eine waagerecht verlaufende Kante des Gehäuses, ausgebildet. Alternativ oder optional ergänzend kann der mindestens eine freie Kantenbereich als eine senkrecht verlaufende Kante des Abdeckungsabschnitts ausgebildet sein. Für den bevorzugten Fall, dass sowohl die Oberkante als auch die Seitenkante des Abdeckungsabschnitts durch die Blende im Verlauf durchgehend umgriffen wird, kann der Abdeckungsabschnitt in seiner Gesamtheit auch mit größeren Toleranzen montiert werden, ohne dass dies das spätere Erscheinungsbild der Aufbewahrungsvorrichtung stören kann.

Bei einer bevorzugten Weiterbildung der Erfindung ist vorgesehen, dass die Blende an dem Schubladenkörper in mindestens einer Richtung senkrecht zu der Auszugsrichtung verstellbar angeordnet ist. Somit ist die Blende wahlweise höhenverstellbar und/oder seitenverstellbar angeordnet. Diese Weiterbildung hat den Vorteil, dass eventuell auftretende Fertigungstoleranzen oder Montagetoleranzen durch eine Verschiebung der Blende relativ zu dem Schubladenkörper bei der Montage einfach ausgeglichen werden können. Bei einer möglichen konstruktiven Ausgestaltung der Erfindung ist die Blende über eine Klettverbindung mit dem Schubladenkörper verbunden. Eine Klettverbindung erlaubt eine nahezu wahlfreie Positionierung der Blende relativ zu dem Schubladenkörper, sodass die Blende damit auch relativ zu dem Gehäuse beliebig eingestellt werden kann.

Konstruktiv betrachtet ist es bevorzugt, dass der Hauptabschnitt als ein insbesondere senkrecht ausgerichteter, erster Seitenwandabschnitt ausgebildet ist. Besonders bevorzugt ist der Hauptabschnitt ausschließlich plan oder eben realisiert. Im Speziellen ist der Hauptabschnitt als eine Platte ausgebildet. Zudem ist es bevorzugt, dass der Abdeckungsabschnitt einen zweiten Seitenwandabschnitt aufweist, wobei der zweite Seitenwandabschnitt parallel zu dem ersten Seitenwandabschnitt angeordnet ist. Ferner umfasst der Abdeckungsabschnitt einen Dachabschnitt, welcher mit dem Hauptabschnitt, insbesondere mit dem ersten Seitenwandabschnitt lösbar verbindbar und/oder verbunden ist. In dieser Ausgestaltung kann somit in einem ersten Montageschritt nur die Vormontagebaugruppe mit dem Hauptabschnitt montiert werden, so dass zunächst nur der erste Seitenwandabschnitt aufgestellt ist. Der zweite Seitenwandabschnitt und der Dachabschnitt werden erst durch die Montage des Abdeckungsabschnitts aufgestellt.

Vorzugsweise kann die Aufbewahrungsvorrichtung mit den gleichen Hauptkomponenten in einer Version, wobei die Schublade aus einer Stirnseite des Gehäuses ausfahrbar ist, und in einer zweiten Version, wobei die Schublade aus der anderen Stirnseite des Gehäuses fahrbar ist montiert werden. Zu den Hauptkomponenten zählen insbesondere der Schubladenkörper, der Hauptabschnitt, der Abdeckungsabschnitt und die Schieneneinrichtung.

Es ist besonders bevorzugt, dass die Vormontagebaugruppe mechanische Schnittstellen zur Befestigung der Aufbewahrungsvorrichtung in dem Flugzeug aufweist. Diese bevorzugte Ausführungsform unterstreicht die Idee, dass zunächst die Vormontagebaugruppe montiert wird und erst nachfolgend die anderen Komponenten der Aufbewahrungsvorrichtung aufgestellt werden. Eine erste Art der mechanischen Schnittstellen wird durch die Befestigungsanordnung gebildet. Optional ergänzend sind weitere mechanische Schnittstellen in dem Hauptabschnitt, insbesondere in dem ersten Seitenwandabschnitt, zur Befestigung an einer Wand des Flugzeugs ausgebildet. Dabei kann es ausreichend sein, dass die mechanischen Schnittstellen als Durchgangsöffnungen realisiert sind. Es ist jedoch auch möglich, dass die mechanischen Schnittstellen als Gewindeeinsätze oder andere Verbindungseinsätze ausgebildet sind.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen:
Figur 1a, b eine schematische dreidimensionale Ansicht einer Aufbewahrungsvorrichtung als ein Ausführungsbeispiel der Erfindung;
Figur 2a, b die Schublade der Aufbewahrungsvorrichtung in einer Einzeldarstellung;
Figur 3 die Schublade der Aufbewahrungsvorrichtung mit abgenommener Blende;
Figur 4 eine seitliche Draufsicht auf die Aufbewahrungsvorrichtung der vorhergehenden Figuren;
Figur 5 eine Vormontagebaugruppe der Aufbewahrungsvorrichtung der vorhergehenden Figuren;
Figur 6a, b der Abdeckabschnitt der Aufbewahrungsvorrichtung der vorhergehenden Figuren;
Figur 7 die Vormontagebaugruppe der Figur 5 mit der Schublade der Figuren 2a, b und 3;
Figur 8 eine Detaildarstellung der Schieneneinrichtung mit einer Befestigungsanordnung als ein Ausführungsbeispiel der Erfindung;
Figur 9a, b, c die Befestigungsanordnung der Figur 8 in verschiedenen Detaildarstellungen;
Figur 10 eine schematische dreidimensionale Detailansicht der Aufbewahrungsvorrichtung von unten.

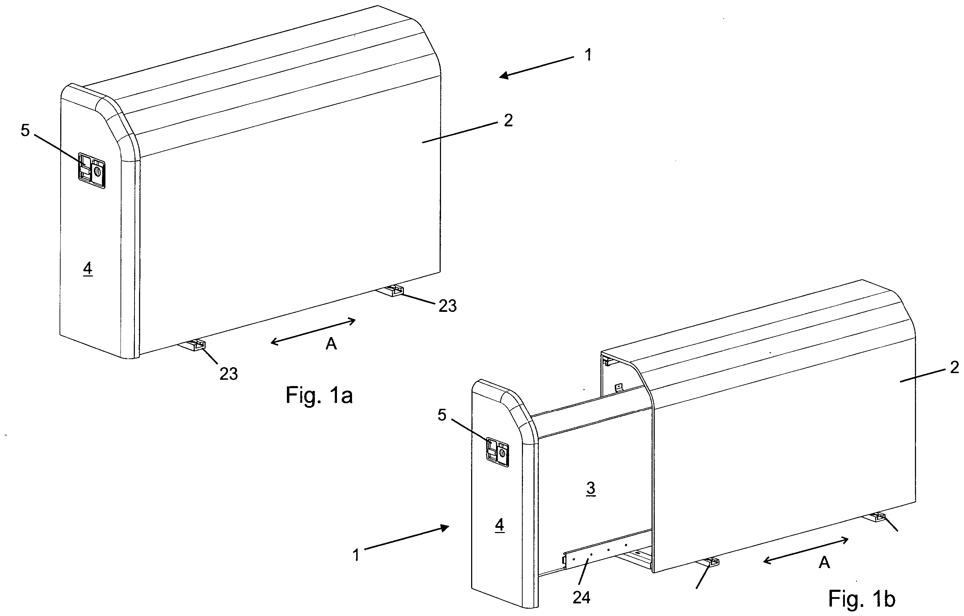

Die Figuren 1a und 1b zeigen eine Aufbewahrungsvorrichtung 1 für eine Notfallausrüstung (nicht dargestellt) jeweils in einer schematischen dreidimensionalen Darstellung. Die Aufbewahrungsvorrichtung 1 wird in einem Flugzeug, insbesondere in dem Passagierraum des Flugzeugs integriert. Die Notfallausrüstung ist üblicherweise als ein Notfallkoffer oder als eine Notfallbox ausgebildet und weist z.B. Verbandsmaterial, Medikamente etc. auf. Alternativ sind Komponenten der Notfallausrüstung lose oder mit Haltern in der Aufbewahrungsvorrichtung angeordnet.

Die Aufbewahrungseinrichtung 1 umfasst ein Gehäuse 2, in dem eine Schublade 3 bewegbar angeordnet ist. Die Schublade 3 kann in einer Auszugsrichtung A von einer Schließposition, wie diese in der Figur 1a dargestellt ist, in eine Öffnungsposition, wie diese in der Figur 1b dargestellt ist, überführt werden. Das Gehäuse 2 hat eine rechteckige Grundfläche, eine Sichtseite, die in den Figuren 1a,b zu erkennen ist, sowie eine Rückseite, die in den Figuren 1a,b vom Betrachter abgewandt ist. Die Sichtseite und die Rückseite sind parallel zueinander angeordnet und bilden Langseiten bei der rechteckigen Grundfläche. Eine Oberseite des Gehäuses 2 ist in einem Querschnitt senkrecht zu der Auszugsrichtung A gekrümmt ausgebildet, wobei ausgehend von der Rückseite zunächst ein senkrecht dazu verlaufender erster Abschnitt nachfolgend ein ca. 45 Grad abgewinkelter zweiter Abschnitt und danach ein in die Sichtseite übergehender dritter Abschnitt vorgesehen ist.

Die vordere Stirnseite des Gehäuses 2 wird durch eine Blende 4 der Schublade 3 gebildet. Die hintere Stirnseite, die in den Figuren 1a,b vom Betrachter abgewandt ist, ist offen, da diese üblicherweise zu einer Wand in dem Flugzeug steht und daher nicht abgedeckt werden muss. Auf der vorderen Sichtseite ist durch die Blende 4 ein Betätigungsmechanismus 5 für eine Verriegelungsmechanik 46 (Figur 11) betätigbar.

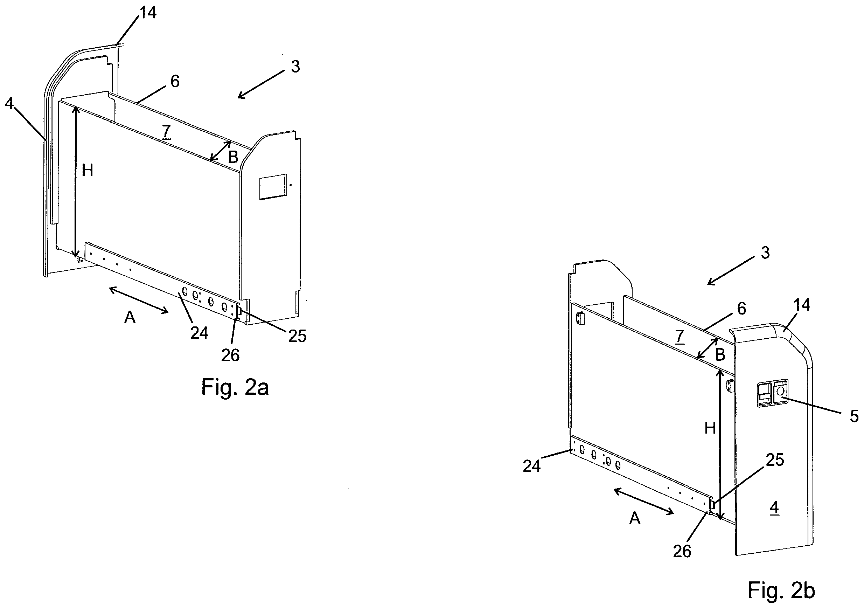

In den Figuren 2a,b ist jeweils die Schublade 3 in einer ebenfalls dreidimensionalen Darstellung gezeigt. Wie bereits erläutert, weist die Schublade 3 die Blende 4 sowie einen Schubladenkörper 6 auf. Der Schubladenkörper 6 bildet einen quaderförmigen Aufnahmeraum 7 für die Notfallausrüstung, wobei es hervorzuheben ist, dass der Aufnahmeraum 7 zum einen eine sich in Auszugsrichtung A erstreckende rechteckige Grundfläche sowie eine Höhe H aufweist, wobei die Höhe H des Aufnahmeraums 7 mehr als dreimal so groß ist, wie die Breite B des Aufnahmeraums 7 senkrecht zu der Auszugsrichtung ausgebildet ist. In den quaderförmigen Aufnahmeraum 7 kann die Notfallausrüstung verkippsicher untergebracht werden, sodass diese maximal bündig und insbesondere zurückgesetzt in dem Aufnahmeraum 7 bzw. in dem Schubladenkörper 6 angeordnet ist.

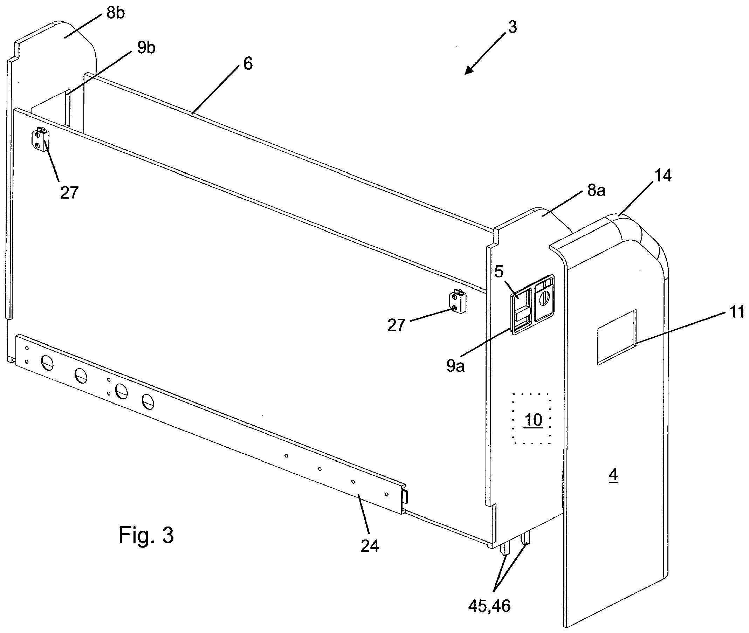

Wie sich insbesondere aus der Figur 3 ergibt, die eine Explosionszeichnung der Schublade 3 darstellt, ist die Blende 4 als ein separates Bauteil zu dem Schubladenkörper 6 ausgebildet. Der Schubladenkörper 6 weist an den Schmalseiten Abdeckplatten 8a,b auf, welche bei diesem Ausführungsbeispiel als Gleichteile ausgebildet werden und welche zudem jeweils eine rechteckige Aussparung 9a,b für den Betätigungsmechanismus 5 aufweisen, welcher bei diesem Ausführungsbeispiel an der Abdeckplatte 8a montiert ist.

Die Blende 4 kann an dem Schubladenkörper 6 in gewissen Grenzen von z.B. mehr als +/- 1 cm in einer Richtung senkrecht zur Auszugsrichtung A frei positioniert werden. Dies wird dadurch erreicht, dass die Blende 4 und der Schubladenkörper 6 über eine Verbindungseinrichtung miteinander verbunden werden, die diese wahlfreie Positionierung zulässt. Beispielsweise ist die Verbindungseinrichtung als eine Klettverbindung 10 ausgebildet. Die Positionierung muss allerdings derart genau erfolgen, dass ein Fenster 11 in der Blende 4 deckungsgleich mit dem Betätigungsmechanismus 5 ist.

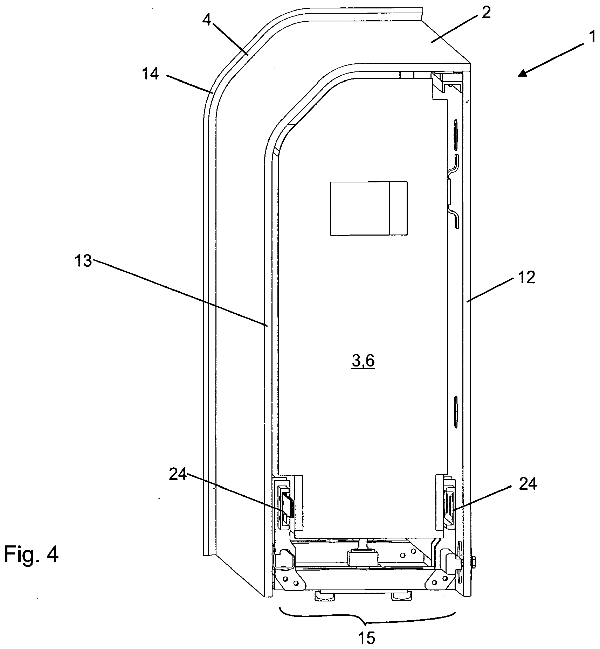

In der Figur 4 ist ein Ansicht auf die hintere Stirnseite der Aufbewahrungsvorrichtung 1 gezeigt, die - wie bereits erläutert - nicht durch ein Seitenteil abgedeckt ist und dadurch den Blick auf die Schublade 3 bzw. den Schubladenkörper 6 ermöglicht. Anhand der Darstellung soll der Vorteil der wahlfreien Positionierung der Blende 4 relativ zu dem Schubladenkörper 6 dargestellt werden. In der Ansicht ist zu erkennen, dass das Gehäuse 2 durch einen Hauptabschnitt 12, welcher einen ersten senkrecht ausgerichteten Seitenwandabschnitt bildet, und einen Abdeckungsabschnitt 13 gebildet ist, welcher einen zweiten Seitenwandabschnitt aufweist, der parallel zu dem ersten Seitenwandabschnitt und/oder dem Hauptabschnitt 12 ausgerichtet ist, sowie einen Dachabschnitt umfasst, welcher die Oberseite des Gehäuses 2 bildet. Insgesamt bildet der Hauptabschnitt 12 die Rückseite und der Abdeckungsabschnitt 13 die Sichtseite sowie die Oberseite des Gehäuses 2.

Bei der Montage der Aufbewahrungsvorrichtung 1 stellt sich stets das Problem, dass die Blende 4 passend zu dem Gehäuse 2 montiert werden muss. Bei bekannten Aufbewahrungsvorrichtungen wird dies oftmals so gelöst, dass die Blende manuell einjustiert wird. Dies ist ein aufwendiger Arbeitsgang. Dadurch, dass die Blende 4 durch die Klettverbindung 10 in einer Richtung senkrecht zu der Auszugsrichtung, also insbesondere in Höhenrichtung und in Querrichtung, wahlfrei eingestellt werden kann, kann diese in einfacher Weise auf den Schubladenkörper 6 aufgesetzt und über die Klettverbindung 10 verbunden werden und gegebenenfalls mit einem einfachen schnellen Handgriff nachjustiert werden.

Zudem weist die Blende 4 einen Kragen 14 auf, welcher entlang der Oberseite und der Sichtseite des Gehäuses 2 verläuft und welcher mit seinem freien Endabschnitt in Auszugsrichtung A ausgerichtet ist und auf diese Weise den Abdeckungsabschnitt 13 in dem Sichtbereich der Aufbewahrungsvorrichtung 1 umgreift. Durch das Umgreifen der Blende 4 wird der freie Kantenbereich des Abdeckungsabschnitts 13 vollständig verdeckt, sodass etwaige verbleibende Montagetoleranzen nicht gesehen werden und folglich unbeachtlich sind. Mit den zwei technischen Hilfsmitteln, nämlich der Klettverbindung 10 und dem Kragen 14 ist es somit möglich, die Blende 4 ästhetisch angenehm und handwerklich korrekt mit einem geringen Aufwand zu montieren.

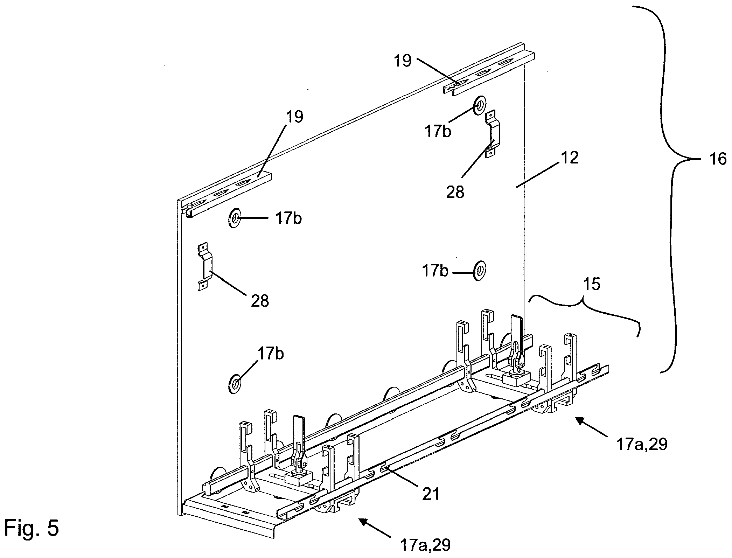

Die Figur 5 zeigt den Hauptabschnitt 12 des Gehäuses 1 zusammen mit einer Schieneneinrichtung 15, auf der die Schublade 3 bewegbar angeordnet werden kann. Manche Komponenten der Schieneneinrichtung 15 sind in der Figur 5 grafisch unterdrückt und werden erst in den nachfolgenden Figuren gezeigt. Die Schieneneinrichtung 15 und der Hauptabschnitt 12 sind als eine Vormontagebaugruppe 16 ausgebildet und miteinander verbunden.

Bei einer Montage der Aufbewahrungsvorrichtung 1 wird die Vormontagebaugruppe 16 einstückig in dem Flugzeug montiert. Zur Fixierung in dem Flugzeug weist die Vormontagebaugruppe 16 mechanische Schnittstellen 17a,b auf. Die mechanischen Schnittstellen 17a sind als Befestigungsanordnungen 29 zur Kopplung mit Befestigungsschienen 23 (Figur 1a,b) ausgebildet, sodass die Aufbewahrungsvorrichtung 1 schienenmontiert werden kann. Die mechanischen Schnittstellen 17b sind als Durchgangsöffnungen oder Gewinde in dem Hauptabschnitt 12, insbesondere in dem ersten Seitenwandabschnitt, angeordnet, wobei Befestigungselemente, wie z.B. Schrauben oder Schnellspanner durch den Hauptabschnitt 12 durchgeführt werden können und mit einer Wand des Flugzeugs verbunden werden können. Auf diese Weise kann die Aufbewahrungsvorrichtung 1 in dem Flugzeug wandmontiert werden.

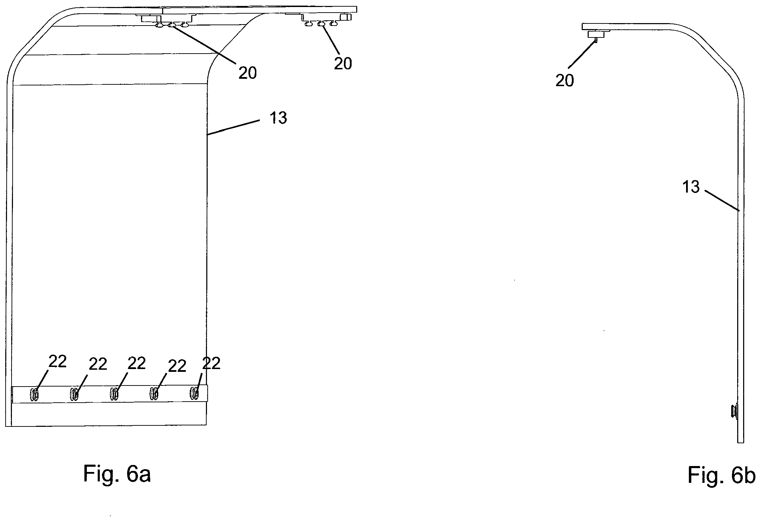

Der Abdeckungsabschnitt 13 ist in den Figuren 6a,b dargestellt, wobei zu erkennen ist, dass es sich hierbei um eine Abdeckhaube handelt, welche im Querschnitt senkrecht zu der Auszugsrichtung A eine umgedreht J-förmige Form aufweist. Der Abdeckungsabschnitt 13 bildet insbesondere kein lasttragendes Teil der Aufbewahrungsvorrichtung 1. Anders ausgedrückt kann die Schublade 3 bereits in der Vormontagebaugruppe 16 montiert und auch bewegt werden und zwar ohne den Abdeckungsabschnitt 13. In einem oberen Bereich des Hauptabschnitts 12 sind Kopplungsmittel 19, in diesem Fall Kopplungsschienen angeordnet. In einem oberen Abschnitt des Abdeckungsabschnitts 13 sind Gegenkopplungsmittel 20, in diesem Fall pilzkopfartige Fortsätze, die in die Kopplungsmittel 19 eingeführt werden können, angeordnet. Auf diese Weise kann der Abdeckungsabschnitt 13 in dem Dachbereich des Gehäuses 2 mit dem Hauptabschnitt 12 verbunden werden.

Die Schieneneinrichtung 15 stellt auf einer dem Hauptabschnitt 12 abgewandten Längsseite weitere Kopplungsschnittstellen 21 bereit, in die Kopplungsgegenschnittstellen 22 des Abdeckungsabschnitts 13 eingreifen können. Der Abdeckungsabschnitt 13 wird durch die Vormontagebaugruppe 16 getragen.

Bei einer Montage ist es nach Befestigung der Vormontagebaugruppe 16 in dem Flugzeug möglich, den Abdeckungsabschnitt 13 auf die Vormontagebaugruppe 16 nachträglich aufzusetzen. Vor dem Aufsetzen des Abdeckungsabschnitts 13 ist der Innenbereich der Aufbewahrungsvorrichtung 1 und insbesondere der Innenbereich der Vormontagebaugruppe 16 für einen Monteur frei zugänglich, sodass die Befestigung in dem Flugzeug vereinfacht ist.

Wie sich insbesondere aus den Figuren 2a,b ergibt, ist die Schublade 3 über ein Laufschienensystem 24 in der Auszugsrichtung A relativ zu der Schieneneinrichtung 15 und damit zu dem Hauptabschnitt 12 verschiebbar gelagert. Das Schienensystem 24 weist eine Laufschiene 25, welche an der Schublade 3 befestigt ist sowie eine Festschiene 26 auf, wobei die Festschiene 26 in der Schieneneinrichtung 15 aufgenommen ist. Die Schublade 3 weist auch auf der gegenüberliegenden Seite ein entsprechendes Schienensystem 24 auf.

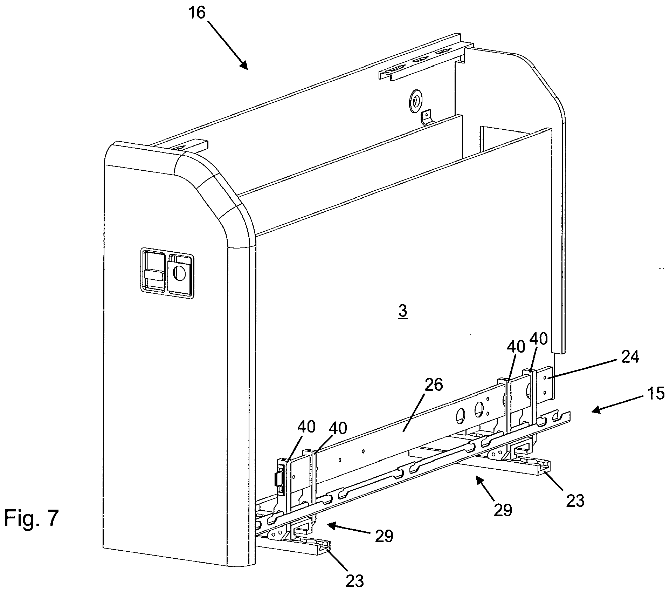

Die Figur 7 zeigt die Aufbewahrungsvorrichtung 1 ohne den Abdeckungsabschnitt 13. Insbesondere ist nur die Vormontagebaugruppe 16 mit der eingesetzten Schublade 3 gezeigt. Die Schublade 3 ist bereits verfahrbar und damit funktionsfähig angeordnet.

Zur weiteren Sicherung der Schublade 3 in der Aufbewahrungsvorrichtung 1 sind an der Schublade 3 Haken 27 angebracht, welche in Bügel 28 einfahren können, die an dem Hauptabschnitt 12 befestigt sind. Dadurch kann zum einen ein Endanschlag der Schublade 3 in dem Gehäuse 2 definiert werden, zum anderen ist die Schublade 3 in seitlicher Richtung gesichert.

In der Figur 7 ist zu erkennen, dass die Vormontagebaugruppe 16 über die Befestigungsschienen 23 in dem Flugzeug befestigt sind. Die Befestigungsschienen 23 sind im Querschnitt mit T-förmigen Nuten ausgebildet, welche komplementär dazu ausgebildete Nutensteine aufnehmen können. Zum Einsetzen der Nutensteine in einer Einsetzrichtung weist die Befestigungsschiene 23 kreisrunde Öffnungen 34 auf, die sich mit Anlagebereichen 18 für die Nutensteine abwechseln. In den Anlagebereichen 18 sind die Nutensteine gegen die Einsetzrichtung formschlüssig gesichert und können an dieser Position zur Befestigung geklemmt werden. Diese Befestigungsschienen 23 werden auch als Lochschienen oder als Airline-Schienen bezeichnet.

Die Schieneneinrichtung 15 weist zwei der Befestigungsanordnungen 29 auf, welche - funktional betrachtet - zum einen die Festschienen 26 tragen und zum anderen die Kopplung der Schieneneinrichtung 15 mit den Befestigungsschienen 23 umsetzen.

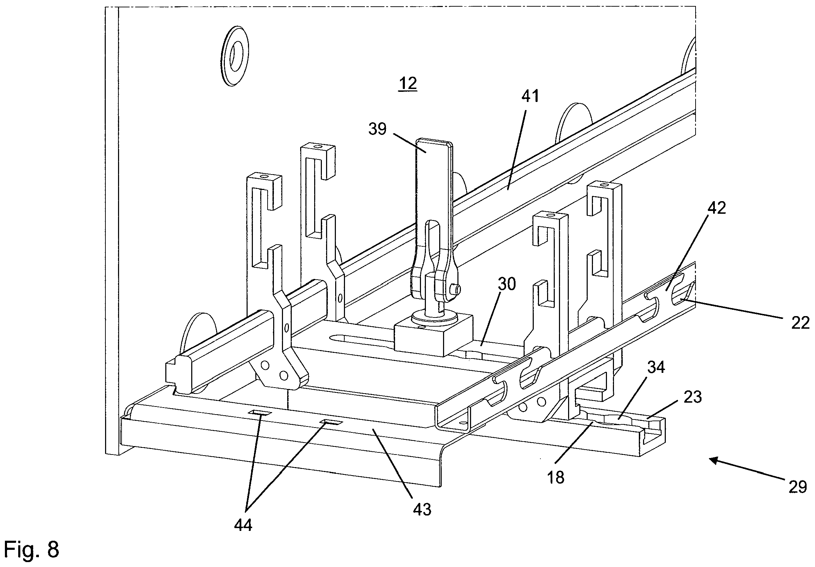

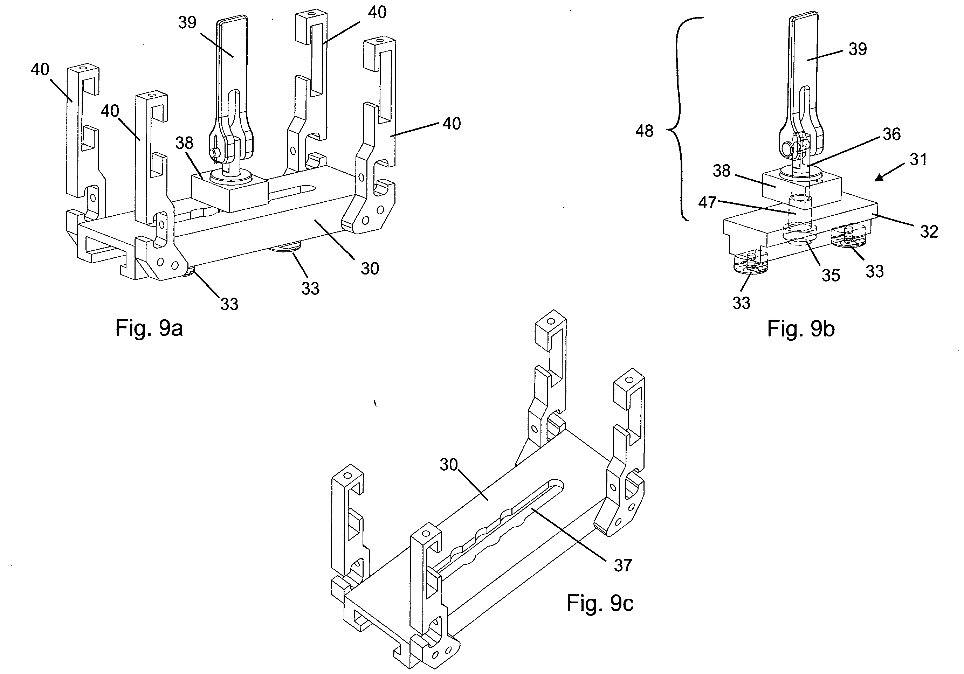

Die Befestigungsanordnung 29 ist in der Figur 8 in einer Detailvergrößerung gezeigt. In dieser Darstellung ist nochmals die Befestigungsschiene 23 dargestellt. Die Befestigungsanordnung 29 umfasst einen Gleitleistenabschnitt 30 sowie eine darin aufgenommene und in der Figur 9b als Einzelteil dargestellte Blockeinrichtung 31. Der Gleitleistenabschnitt 30 ist als eine T-Nutschiene ausgebildet, ein Verschiebekörper 32 der Blockeinrichtung 31 ist im Querschnitt T-förmig und komplementär zu dem Gleitleistenabschnitt 30 ausgebildet, sodass der Verschiebekörper 32 und damit die Blockeinrichtung 31 in dem Gleitleistenabschnitt 30 in einer Richtung senkrecht zur Auszugsrichtung A verschoben werden kann.

An der Unterseite des Verschiebekörpers 32 sind zwei Nutensteine 33 angeordnet, welche in der Größe derart auf die Befestigungsschiene 23 angepasst sind, dass diese in die Öffnungen 34 eingeführt werden können und dort entlang der Längserstreckung der Befestigungsschiene 23 verschoben werden können und gegen die die Anlagebereiche 18 geklemmt werden können.

Die Blockeinrichtung 31 weist einen Stempel 35 auf, welcher in seiner Grundform so ausgebildet ist, dass er in die Öffnungen 34 eingeführt werden kann, jedoch entlang der Längserstreckung der Befestigungsschiene nicht verschoben werden kann, sondern die Blockeinrichtung 31 gegen ein Verschieben formschlüssig sichert. Der Stempel 35 ist an einem Verbindungszapfen 36 befestigt, welcher sich durch den Verschiebekörper 32, durch ein Langloch 37 in dem Gleitleistenabschnitt 30 sowie durch einen Klemmkörper 38 erstreckt, welcher auf dem Gleitleistenabschnitt 30 aufliegt. Das Langloch 37 erstreckt sich parallel zur Längserstreckung der Befestigungsschiene 23. Der Verbindungszapfen 36 trägt ein Außengewinde und greift in ein Gewinde 47 in dem Verschiebekörper 32 ein. Auf dem Verbindungszapfen 36 ist ein Exzenterhebel 39 schwenkbar aufgesetzt. Der Exzenterhebel 39 ist so ausgebildet, dass bei einem Schwenken des Exzenterhebels 39 der Klemmkörper 38 gegen den Gleitleistenabschnitt 30 gedrückt wird und somit den Gleitleistenabschnitt 30 mit der Blockeinrichtung 31 verbindet.

Bei der Montage werden zunächst die Nutensteine 33 in die Befestigungsschiene 23 eingelegt und derart verschoben, dass die Nutensteine 33 an den gewünschten Anlagebereichen 18 der Befestigungsschiene 23 anliegen. Auf diese Weise wird die Befestigungsanordnung und damit die Position der Vormontagebaugruppe 16 bzw. der Aufbewahrungsvorrichtung 1 grob justiert. Nachfolgend wird durch ein Drehen des Verbindungszapfens 36 durch das Zusammenwirken mit dem Gewinde 47 der Stempel 35 aus einer zurückgezogenen Position in dem Verschiebekörper 32 in eine herausragende Position überführt. Der Stempel 35 taucht zunächst in eine der Öffnungen 34 ein und sichert die Blockeinrichtung 31 formschlüssig gegen ein Verschieben entlang der Befestigungsschiene 23. Durch ein Weiterdrehen des Verbindungszapfens 36 wird der Stempel 35 gegen den Nutboden der Befestigungsschiene 23 gedrückt, so dass die Nutensteine 33 gegen die Anlagebereiche 18 geklemmt werden. In dieser Position ist die Blockeinrichtung 31 formschlüssig und zudem kraftschlüssig in der Befestigungsschiene 23 angeordnet. Der Verbindungszapfen 36 ist gestuft ausgebildet, das Langloch 37 weist in Querrichtung Durchmesserverbreiterungen auf. Die Stufung des Verbindungszapfens 36 und die Durchmesserverbreiterungen sind so aufeinander abgestimmt, dass der Verbindungszapfen 36 in der Durchmesserverbreiterung gefangen ist, solange der Stempel 35 noch nicht in der formschlüssig sichernden oder sogar in der kraftschlüssig sichernden Position angeordnet ist. Erst wenn die Position der Blockeinrichtung 31 relativ zu der Befestigungsschiene 23 festgelegt ist, kann der Verbindungszapfen in dem Langloch 37 verschoben werden.

Nachfolgend wird der Exzenterhebel 39 geschwenkt, wobei der Exzenterhebel 39 über den Verbindungszapfen 36 und dem Gewinde 47 abstützt und den Klemmkörper 38 gegen den Gleitleistenabschnitt 30 klemmt. Somit wird durch das Schwenken des Exzenterhebels 39 der Gleitleistenabschnitt 30 relativ zu der Blockeinrichtung 31 und damit relativ zu der Befestigungsschiene 23 fixiert.

Dadurch, dass der Gleitleistenabschnitt 30 das Langloch 37 aufweist, kann die Position des Gleitleistenabschnitts 30 relativ zu der Blockeinrichtung 31 frei eingestellt werden, solange der Exzenterhebel 39 geöffnet ist. Sobald eine korrekte Position gefunden ist, kann der Exzenterhebel 39 geschwenkt und in eine Feststellposition gebracht werden, sodass auch der Gleitleistenabschnitt 30 relativ zu der Blockeinrichtung 31 fixiert ist.

Damit bildet der Exzenterhebel 39 mit dem Verbindungszapfen 36 und dem Gewinde 47 eine Feststelleinrichtung 48, die zum einen die Nutensteine 33 gegen die Befestigungsschiene 23 klemmt und zum anderen den Gleitleistenabschnitt 30 auf der Blockeinrichtung 31 feststellt. Durch die Befestigungsanordnung 29 wird somit ermöglicht, dass der Gleitleistenabschnitt 30 frei in Längserstreckung der Befestigungsschiene 23 einstellbar ist.

An dem Gleitleistenabschnitt 30 sind Träger 40 angeordnet, welche in einem Funktionsabschnitt die Festschiene 26 tragen (vgl. Figur 7). Ferner sind in dem Träger 40, insbesondere in dem Funktionsabschnitt, Aufnahmen für Montageleisten 41 in den Trägern 40 vorgesehen, welche zum einen die Träger 40 gegeneinander abstützen und zum anderen zur Befestigung an dem Hauptabschnitt 12 dienen. Dadurch, dass der Gleitleistenabschnitt 30 über die Träger 40 sowohl mit den Festschienen 26 als auch mit den Montageschienen 41 verbunden ist, kann somit durch ein Verschieben des Gleitleistenabschnitts 30 relativ zu der Blockeinrichtung 31 die Vormontagebaugruppe 16 in Verschieberichtung der Befestigungsschienen 23 frei eingestellt werden. Sobald von einem Monteur die korrekte Position gefunden ist, muss der Exzenterhebel 39 von der Freigabeposition in die Feststellposition überführt werden und die Aufbewahrungsvorrichtung 1 als ein Modul ist relativ zu dem Befestigungsschienen 23 fixiert.

Aus der Figur 8 ist zu erkennen, dass auf der anderen Seite der Schieneneinrichtung 15 gegenüberliegend zu der Montageschiene 41 eine Kopplungsschiene 42 von den Trägern 40 getragen wird, wobei die Kopplungsschiene 42 die Kopplungsgegenschnittstellen 22 trägt.

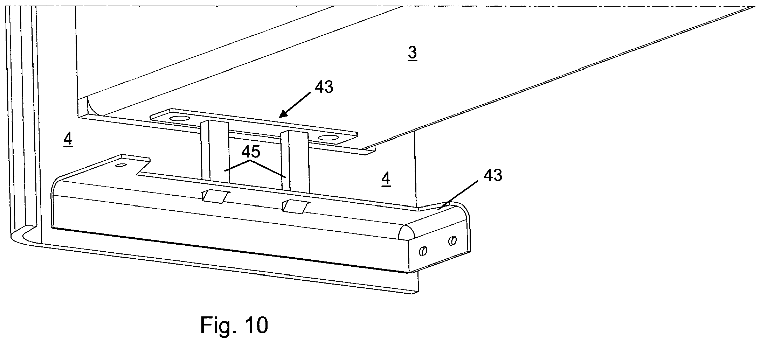

Die Schieneneinrichtung 15 weist ferner einen Verriegelungsschienenabschnitt 43 auf, welcher sich parallel zu den Befestigungsschienen 23 beziehungsweise zum Gleitleistenabschnitt 30 erstreckt und welcher Aufnahmen 44 für Verriegelungselemente 45 der Verriegelungsmechanik 46 aufweist, wie dies in der Figur 10 dargestellt ist.

### Bezugszeichenliste

- 1: Aufbewahrungsvorrichtung
- 2: Gehäuse
- 3: Schublade
- 4: Blende
- 5: Betätigungsmechanismus
- 6: Schubladenkörper
- 7: Quaderförmiger Aufnahmeraum
- 8: Abdeckplatte
- 9: Rechteckige Aussparung
- 10: Klettverbindung
- 11: Fenster
- 12: Hauptabschnitt
- 13: Abdeckungsabschnitt
- 14: Kragen
- 15: Schieneneinrichtung
- 16: Vormontagebaugruppe
- 17: Mechanische Schnittstelle
- 18: Anlagebereiche
- 19: Kopplungsmittel
- 20: Gegenkopplungsmittel
- 21: Weitere Kopplungsschnittstellen
- 22: Kopplungsgegenschnittstellen
- 23: Befestigungsschiene
- 24: Laufschienensystem
- 25: Laufschiene
- 26: Festschiene
- 27: Haken
- 28: Bügel
- 29: Befestigungsanordnung
- 30: Gleitleistenabschnitt
- 31: Blockeinrichtung
- 32: Verschiebekörper
- 33: Nutensteine
- 34: Öffnungen
- 35: Stempel
- 36: Verbindungszapfen
- 37: Langloch
- 38: Klemmkörper
- 39: Exzenterhebel
- 40: Träger
- 41: Montageleisten
- 42: Kopplungsschiene
- 43: Verriegelungsschienenabschnitt
- 44: Aufnahmen
- 45: Verriegelungselemente
- 46: Verriegelungsmechanik
- 47: Gewinde
- 48: Feststelleinrichtung

- A: Auszugsrichtung
- B: Breite
- H: Höhe

## Patentansprüche

1. Befestigungsanordnung (29) für ein Flugzeug zur Befestigung eines Moduls (1) an mindestens einer Befestigungsschiene (23),
mit einer Blockeinrichtung (31), wobei die Blockeinrichtung (31) mindestens einen Nutenstein (33) zur Befestigung der Blockeinrichtung (31) in der Befestigungsschiene (23) aufweist,
mit einer Feststelleinrichtung (48) zur Klemmung des mindestens einen Nutensteins (33) in der Befestigungsschiene (23),
**dadurch gekennzeichnet, dass**
die Befestigungsanordnung (29) einen Gleitleistenabschnitt (30) zur Verbindung der Befestigungsanordnung (29) mit dem Modul (1) aufweist, wobei der Gleitleistenabschnitt (30) auf der Blockeinrichtung (31) verschiebbar angeordnet und durch die Feststelleinrichtung (48) feststellbar ist,
und dass die Befestigungsanordnung (29) die mindestens eine Befestigungsschiene (23) umfasst, wobei die Befestigungsschiene (23) als eine T-Nut-Schiene mit voneinander beabstandeten Anlagebereichen (18) für den Nutenstein (33) ausgebildet ist,
und dass der Gleitleistenabschnitt (30) relativ zu der Blockeinrichtung (31) stufenlos verstellbar ist oder dass der Gleitleistenabschnitt (30) relativ zu der Blockeinrichtung (31) gestuft verstellbar ist, wobei der kleinstmögliche Verstellabstand kleiner als ein Rastermaß oder ein durchschnittlicher Abstand der voneinander beabstandeten Anlagebereiche (18) in der Befestigungsschiene (23) ist, so dass die Befestigungsanordnung (29) eine Vorauswahl der Position auf der Befestigungsschiene (23) durch das Einsetzen der Blockeinrichtung (31) mit dem Nutenstein (33) in die Befestigungsschiene (23) aufweist, eine Feinjustierung jedoch über das Verschieben des Gleitleistenabschnitts (30) ermöglicht.

2. Befestigungsanordnung (29) nach Anspruch 1, **dadurch gekennzeichnet, dass** die Blockeinrichtung (31) und/oder die Festelleinrichtung (48) mindestens einen Stempel (35) aufweist, wobei der Stempel (35) in eine Öffnung (34) der T-Nut-Schiene eingreifen kann oder eingreift und die Blockeinrichtung (31) gegen ein Verschieben formschlüssig sichert.

3. Befestigungsanordnung (29) nach Anspruch 2, **dadurch gekennzeichnet, dass** die Festelleinrichtung (48) einen Hebel (39) und einen Verbindungszapfen (36) aufweist, wobei der Verbindungszapfen (36) in die Blockeinrichtung (31) einschraubbar ist, wobei der Verbindungszapfen (36) mit dem Stempel (35) verbunden ist, so dass durch ein Einschrauben des Verbindungszapfens (36) der Stempel (35) in die Öffnung (34) der T-Nut-Schiene gefahren wird und wobei sich der Hebel (39) über den Gleitleistenabschnitt (30) abstützt und bei einer Betätigung den Gleitleistenabschnitt (30) auf der Blockeinrichtung (31) feststellt.

4. Befestigungsanordnung (29) nach einem der vorhergehenden Ansprüche 1 bis 2, **dadurch gekennzeichnet, dass** die Festelleinrichtung (48) einen Hebel (39) und einen Verbindungszapfen (36) aufweist, wobei der Verbindungszapfen (36) mit dem Nutenstein (33) verbunden ist und wobei sich der Hebel (39) über den Gleitleistenabschnitt (30) abstützt und bei einer Betätigung den Nutenstein (33) in dem Anlagebereich (18) klemmt und zugleich den Gleitleistenabschnitt (30) auf der Blockeinrichtung (31) feststellt.

5. Befestigungsanordnung (29) nach einem der vorhergehenden Ansprüche, **dadurch gekennzeichnet, dass** der Gleitleistenabschnitt (30) ein Langloch (37) aufweist, durch das die Festelleinrichtung (48) geführt ist.

6. Befestigungsanordnung (29) nach einem der vorhergehenden Ansprüche, **dadurch gekennzeichnet, dass** an dem Gleitleistenabschnitt (30) mindestens ein Träger (40) zur Verbindung mit dem Modul (1) angeordnet ist.

7. Befestigungsanordnung (29) nach Anspruch 6, **dadurch gekennzeichnet, dass** der Träger (40) mit mindestens einer Festschiene (26) verbunden ist, wobei die Befestigungsanordnung (29) einen Teil einer Schieneneinrichtung (15) bildet.

8. Aufbewahrungsvorrichtung (1) für eine Notfallausrüstung in einem Flugzeug mit einem Gehäuse (2), mit einer Schieneneinrichtung (15), wobei die Schieneneinrichtung (15) in dem Gehäuse (2) angeordnet ist, mit einer Schublade (3) zur Aufnahme der Notfallausrüstung, wobei die Schublade (3) in einer Auszugsrichtung (A) auf der Schieneneinrichtung (15) bewegbar angeordnet ist, und wobei die Schieneneinrichtung (15) und/oder die Aufbewahrungsvorrichtung (1) mindestens eine Befestigungsanordnung (29) nach einem der vorhergehenden Ansprüche aufweist.

9. Aufbewahrungsvorrichtung (1) nach Anspruch 8, **dadurch gekennzeichnet, dass** das Gehäuse (2) einen Hauptabschnitt (12) und einen Abdeckungsabschnitt (13) aufweist, wobei die Schieneneinrichtung (15) mit dem Hauptabschnitt (12) verbunden ist, so dass diese eine Vormontagebaugruppe (16) bilden und wobei der Abdeckungsabschnitt (13) an der Vormontagebaugruppe (16) befestigt ist.

10. Aufbewahrungsvorrichtung (1) nach Anspruch 9, **dadurch gekennzeichnet, dass** der Hauptabschnitt (12) als ein erster Seitenwandabschnitt ausgebildet ist und dass der Abdeckungsabschnitt (13) einen zweiten Seitenwandabschnitt sowie einen Dachabschnitt aufweist, wobei der zweite Seitenabschnitt parallel zu dem ersten Seitenwandabschnitt angeordnet ist und wobei der Dachabschnitt mit dem ersten Seitenwandabschnitt lösbar verbindbar oder verbunden ist.

11. Aufbewahrungsvorrichtung (1) nach einem der vorhergehenden Ansprüche 8 bis 10, **dadurch gekennzeichnet, dass** die Vormontagebaugruppe (16) mechanische Schnittstellen (17a) zur Befestigung in dem Flugzeug aufweist, wobei die mechanische Schnittstellen (17a) als die mindestens eine Befestigungsanordnung (29) ausgebildet ist.

## Claims

1. Fastening arrangement (29) for an aircraft, for fastening a module (1) on at least one fastening rail (23),
having a blocking device (31), wherein the blocking device (31) has at least one sliding block (33) for fastening the blocking device (31) in the fastening rail (23),
having an arresting device (48) for clamping the at least one sliding block (33) in the fastening rail (23),
**characterized in that**
the fastening arrangement (29) has a sliding-strip portion (30) for connecting the fastening arrangement (29) to the module (1), wherein the sliding-strip portion (30) is arranged in a displaceable manner on the blocking device (31) and can be arrested by the arresting device (48),
and **in that** the fastening arrangement (29) comprises the at least one fastening rail (23), wherein the fastening rail (23) is designed in the form of a T-slot rail with spaced-apart abutment regions (18) for the sliding block (33),
and **in that** the sliding-strip portion (30) can be adjusted in a stepless manner relative to the blocking device (31), or **in that** the sliding-strip portion (30) can be adjusted in steps relative to the blocking device (31), wherein the smallest possible adjustment distance is smaller than a unit spacing or an average distance between the spaced-apart abutment regions (18) in the fastening rail (23), and therefore the fastening arrangement (29) has pre-selection of the position on the fastening rail (23) by virtue of the blocking device (31) being inserted into the fastening rail (23) by way of the sliding block (33), but provides for position adjustment via the displacement of the sliding-strip portion (30).

2. Fastening arrangement (29) according to Claim 1, **characterized in that** the blocking device (31) and/or the arresting device (48) have/has at least one pressure-exerting element (35), wherein the pressure-exerting element (35) can engage, or engages, in an opening (34) of the T-slot rail and secures the blocking device (31) in a form-fitting manner against displacement.

3. Fastening arrangement (29) according to Claim 2, **characterized in that** the arresting device (48) has a lever (39) and a connecting pin (36), wherein the connecting pin (36) can be screwed into the blocking device (31), wherein the connecting pin (36) is connected to the pressure-exerting element (35), and therefore, by virtue of the connecting pin (36) being screwed in, the pressure-exerting element (35) is moved into the opening (34) of the T-slot rail, and wherein the lever (39) is supported via the sliding-strip portion (30) and, upon actuation, arrests the sliding-strip portion (30) on the blocking device (31).

4. Fastening arrangement (29) according to either of preceding Claims 1 and 2, **characterized in that** the arresting device (48) has a lever (39) and a connecting pin (36), wherein the connecting pin (36) is connected to the sliding block (33), and wherein the lever (39) is supported via the sliding-strip portion (30) and, upon actuation, clamps the sliding block (33) in the abutment region (18) and, at the same time, arrests the sliding-strip portion (30) on the blocking device (31).

5. Fastening arrangement (29) according to one of the preceding claims, **characterized in that** the sliding-strip portion (30) has a slot (37), through which the arresting device (48) is guided.

6. Fastening arrangement (29) according to one of the preceding claims, **characterized in that** at least one carrier (40) for connection to the module (1) is arranged on the sliding-strip portion (30).

7. Fastening arrangement (29) according to Claim 6, **characterized in that** the carrier (40) is connected to at least one fixed rail (26), wherein the fastening arrangement (29) forms part of a rail device (15).

8. Storage apparatus (1) for emergency equipment in an aircraft, having a housing (2), having a rail device (15), wherein the rail device (15) is arranged in the housing (2), and having a drawer (3) for accommodating the emergency equipment, wherein the drawer (3) is arranged on the rail device (15) for movement in a pull-out direction (A), and wherein the rail device (15) and/or the storage apparatus (1) have/has at least one fastening arrangement (29) according to one of the preceding claims.

9. Storage apparatus (1) according to Claim 8, **characterized in that** the housing (2) has a main portion (12) and a cover portion (13), wherein the rail device (15) is connected to the main portion (12), and these therefore form a preassembly unit (16), and wherein the cover portion (13) is fastened on the preassembly unit (16).

10. Storage apparatus (1) according to Claim 9, **characterized in that** the main portion (12) is designed in the form of a first side-wall portion, and **in that** the cover portion (13) has a second side-wall portion and a roof portion, wherein the second side portion is arranged parallel to the first side-wall portion, and wherein the roof portion can be, or is, connected in a releasable manner to the first side-wall portion.

11. Storage apparatus (1) according to one of preceding Claims 8 to 10, **characterized in that** the preassembly unit (16) has mechanical interfaces (17a) for fastening purposes in the aircraft, wherein the mechanical interfaces (17a) are designed in the form of the at least one fastening arrangement (29).

## Revendications

1. Arrangement de fixation (29) pour un aéronef servant à la fixation d'un module (1) à au moins un rail de fixation (23),
comprenant un dispositif de blocage (31), le dispositif de blocage (31) possédant au moins un coulisseau (33) servant à fixer le dispositif de blocage (31) dans le rail de fixation (23),
comprenant un dispositif d'immobilisation (48) servant à serrer l'au moins un coulisseau (33) dans le rail de fixation (23),
**caractérisé en ce que**
l'arrangement de fixation (29) possède une portion de glissière (30) servant à relier l'arrangement de fixation (29) avec le module (1), la portion de glissière (30) étant montée coulissante sur le dispositif de blocage (31) et pouvant être immobilisée par le dispositif d'immobilisation (48),
et **en ce que** l'arrangement de fixation (29) comporte l'au moins un rail de fixation (23), le rail de fixation (23) étant réalisé sous la forme d'un rail à rainure en T avec des zones d'appui (18) espacées mutuellement pour le coulisseau (33),
et **en ce que** la portion de glissière (30) est positionnable en continu par rapport au dispositif de blocage (31) ou **en ce que** la portion de glissière (30) est positionnable par paliers par rapport au dispositif de blocage (31), le plus petit écart de positionnement étant inférieur à une cote modulaire ou à un écart moyen entre les zones d'appui (18) mutuellement voisines dans le rail de fixation (23), de sorte que l'arrangement de fixation (29) possède une présélection de la position sur le rail de fixation (23) par l'insertion du dispositif de blocage (31) avec le coulisseau (33) dans le rail de fixation (23), en permettant cependant un réglage précis par le coulissement de la portion de glissière (30).

2. Arrangement de fixation (29) selon la revendication 1, **caractérisé en ce que** le dispositif de blocage (31) et/ou le dispositif d'immobilisation (48) possède au moins un poinçon (35), le poinçon (35) pouvant venir en prise ou venant en prise dans une ouverture (34) du rail à rainure en T et calant le dispositif de blocage (31) par complémentarité de formes pour l'empêcher de coulisser.

3. Arrangement de fixation (29) selon la revendication 2, **caractérisé en ce que** le dispositif d'immobilisation (48) possède un levier (39) et un tenon de liaison (36), le tenon de liaison (36) pouvant être vissé dans le dispositif de blocage (31), le tenon de liaison (36) étant relié au poinçon (35) de sorte que le poinçon (35) est amené dans l'ouverture (34) du rail à rainure en T par un vissage du tenon de liaison (36) et le levier (39) prenant appui par le biais de la portion de glissière (30) et immobilisant la portion de glissière (30) sur le dispositif de blocage (31) lors d'un actionnement.

4. Arrangement de fixation (29) selon l'une des revendications précédentes 1 et 2, **caractérisé en ce que** le dispositif d'immobilisation (48) possède un levier (39) et un tenon de liaison (36), le tenon de liaison (36) étant relié au coulisseau (33) et le levier (39) prenant appui par le biais de la portion de glissière (30) et calant le coulisseau (33) dans la zone d'appui (18) lors d'un actionnement et immobilisant en même temps la portion de glissière (30) sur le dispositif de blocage (31) .

5. Arrangement de fixation (29) selon l'une des revendications précédentes, **caractérisé en ce que** la portion de glissière (30) possède un trou oblong (37) à travers lequel passe le dispositif d'immobilisation (48).

6. Arrangement de fixation (29) selon l'une des revendications précédentes, **caractérisé en ce qu'**au moins un élément porteur (40) destiné à la liaison avec le module (1) est disposé au niveau de la portion de glissière (30).

7. Arrangement de fixation (29) selon la revendication 6, **caractérisé en ce que** l'élément porteur (40) est relié avec au moins un rail fixe (26), l'arrangement de fixation (29) formant une partie d'un dispositif à rails (15).

8. Système de stockage (1) pour un équipement de secours dans un aéronef comprenant un boîtier (2), comprenant un dispositif à rails (15), le dispositif à rails (15) étant disposé dans le boîtier (2), comprenant un tiroir (3) destiné à accueillir l'équipement de secours, le tiroir (3) étant monté mobile sur le dispositif à rails (15) dans une direction d'extraction (A), et le dispositif à rails (15) et/ou le système de conservation (1) possédant au moins un arrangement de fixation (29) selon l'une des revendications précédentes.

9. Système de stockage (1) selon la revendication 8, **caractérisé en ce que** le boîtier (2) possède une portion principale (12) et une portion de recouvrement (13), le dispositif à rails (15) étant relié à la portion principale (12) de telle sorte que ceux-ci forment un groupe de prémontage (16) et la portion de recouvrement (13) étant fixée au groupe de prémontage (16).

10. Système de stockage (1) selon la revendication 9, **caractérisé en ce que** la portion principale (12) est réalisée sous la forme d'une première partie de paroi latérale et **en ce que** la portion de recouvrement (13) possède une deuxième partie de paroi latérale et une portion de toit, la deuxième partie de paroi latérale étant disposée parallèlement à la première partie de paroi latérale et la portion de toit pouvant être reliée ou étant reliée de manière amovible à la première partie de paroi latérale.

11. Système de stockage (1) selon l'une des revendications 8 à 10, **caractérisé en ce que** le groupe de prémontage (16) possède des interfaces mécaniques (17a) servant à la fixation dans l'aéronef, les interfaces mécaniques (17a) étant réalisées sous la forme de l'au moins un arrangement de fixation (29).
